# EUROPEAN PATENT SPECIFICATION

(11) **EP 1 893 922 B1**
(45) Date of publication and mention of the grant of the patent: **06.05.2009**
(21) Application number: 05754721.8
(22) Date of filing: 16.06.2005
(51) Int. Cl.: F24J 2/26, F24J 2/46, F16L 3/18, F16L 3/20

(54) **SOLAR COLLECTOR**
SONNENKOLLEKTOR
COLLECTEUR SOLAIRE

(43) Date of publication of application: 05.03.2008
(73) Proprietor: VKR Holding A/S, 2970 Hørsholm (DK)
(72) Inventor: MØLLER, Brent, DK-2820 Gentofte (DK); JACOBSEN, Per, DK-8700 Horsens (DK); NYGAARD, Johnny, DK-8722 Hedensted (DK)
(74) Representative: Nordic Patent Service
(86) International application number: PCT/EP2005/006460
(87) International publication number: WO 2006/133724

(56) References cited:
- EP-A- 1 243 874
- CH-A5- 684 114
- DE-A1- 10 114 867
- FR-A- 2 461 840
- US-A- 5 441 100

## Description

The present invention relates to solar collectors, in particular solar collectors that include a rectangular frame, preferably made of extruded or rollformed metal, containing an absorber plate, an insulating layer beneath the absorber plate, and a cover pane spaced above the absorber. Absorber tubing is attached to the rear side of the absorber plate. The collectors can be integrated or roof mounted on a pitched roof, or may be installed on a flat roof by means of a mounting frame.

### BACKGROUND ART

WO 2004/111550 discloses such a type of solar collector. The absorber is simply inserted in the frame or another housing. The absorber is held in place by the connection of the absorber tubes to the frame, but it is also known to hold the absorber in place by imbedding the absorber in the insulation material.

Neither method for securing the absorber is ideal. A stiff connection between the absorber tubes and the frame cannot provide for the required flexibility, which is needed to deal with the large temperature variations and the consequent expansions and contractions in order to avoid tensions and damages.

Absorbers that are simply placed on the insulation layer, e.g. stone wool, and have flexible connections between the absorber tubes and the frame, are known to have problems with the absorber plate getting displaced during transport or during mounting of the solar collector on a roof or the like.

EP 1 243 874 discloses a type of solar collector in which the absorber is secured to the frame by resilient fasteners. The resilient fasteners reduce the risk of displacement during transport or mounting but do not quite eliminate the problem. Further, this solution requires that several mounting tubes are added to the absorber construction to provide an engagement point for the resilient fasteners.

CH 684 114 discloses a support member for a pipeline suspended from the ceiling in a tunnel or building. Each support member has a nut at the top which screws onto an anchoring bolt projecting downward from the ceiling. The metal strip fastened to the nut is bent downwards at the ends, one end terminating in a flange accommodating a bolt fastening it to a bottom strip. The other end of the first metal strip is bent up to form a hook (2b) which engages a slit in the other end of the second strip. The support member can be closed in two positions. In one of the two positions the pipeline is firmly engaged by the support member and the pipeline cannot move relative to the support member. In the other position the support member is loosely engaged and the pipeline can move longitudinally relative to the support member.

US 5,441,100 discloses a heat exchanger has a plurality of flat tubes which alternate with fins, and the tubes and the fins are disposed one on another. Both ends of each tube are connected to a pair of right-hand and lefthand headers, in fluid communication with them. The headers have their ends closed with caps, and each cap has a pin integral with it so as to hold in place a bracket which is used to mount the heat exchanger on a structural base. The integral pins protrude upwards or downwards from the caps.

### DISCLOSURE OF THE INVENTION

On this background, it is an object of the present invention to provide a solar collector in which the absorber is secured in a reliable and flexible manner. This object is achieved in accordance with claim 1 by providing solar collector comprising a frame, preferably made of extruded or rollformed metal, an absorber plate, absorber tubing secured to the rear side of the absorber plate, an insulating layer beneath the absorber plate, a cover pane spaced above the absorber, four or more mounting brackets for connecting the absorber with the frame, said mounting brackets engage the absorber tubing, whereby a first mounting bracket engages the absorber tubing in a manner that does not allow any substantial displacement between the first bracket and said absorber tubing, a second mounting bracket engages the absorber tubing in a manner that allows displacement between the second bracket and said absorber tubing only in a first direction in the plane of the absorber plate to allow for thermal expansion and contraction of the absorber plate in said first direction, a third mounting bracket engages the absorber tubing in a manner that allows displacement between the third bracket and said absorber tubing only in a second direction in the plane of the absorber plate that is substantially transverse to the first direction to allow for thermal expansion and contraction of the absorber plate in said second direction, and a fourth mounting bracket engages the absorber tubing in a manner that allows displacement between the fourth bracket and said absorber tubing in both the first and second direction to allow for thermal expansion and contraction of the absorber plate in said first and second direction.

The first mounting bracket fixes the position of the absorber to the frame, and the risk of the absorber plate getting displaced during transport or mounting of the solar collector is substantially eliminated. The other mounting brackets allow a substantially unhindered thermal expansion of the absorber plate, and this there amount of tension an stress that could otherwise be caused during the large day/night summer/winter and stagnation temperatures fluctuations to which a solar collectors are exposed.

The mounting brackets may be rectangularly spaced apart, and the absorber tubing preferably includes two parallel tubes with a preferably larger diameter that are interconnected by a plurality of preferably lesser diameter tubes extending between the large diameter tubes in a direction substantially transverse to the large diameter tubes. Preferably, the larger diameter tubes extend in the first direction, whereas the lesser diameter tubes extend in the second direction.

The first mounting bracket and the fourth mounting bracket are preferably disposed diagonally opposite to one another. The second mounting bracket and the third mounting bracket are preferably disposed diagonally opposite to one another.

The first mounting bracket may engage both a tube section that extends in the first direction and a tube section that extends in the second direction, preferably there where the two tubes are connected to one another.

The second mounting bracket may slidably engage a tube section that extends in the first direction to allow for displacement between said tube section and the second mounting bracket in the first direction.

The third mounting bracket may slidably engage a tube section that extends in the second direction and loosely engages a tube section that extends in the first direction to allow for displacement between said tube sections and the third bracket in the second direction.

The fourth mounting bracket may loosely- and slidably engage a tube section that extends in the first direction or in the second direction to allow for displacement between said tube section and the fourth bracket in the first and second direction.

Preferably, the four or more mounting brackets are substantially identical to one another.

This object is achieved in accordance with claim 11 by providing a solar collector with a mounting bracket for engaging one or more tube sections, the mounting bracket comprising two tube engaging members that can be fixed to engage a tube section in at least two positions, a first position in which the tube section is slidably engaged and a second position in which the tube section is loosely engaged to allow displacement between the tube section and the mounting bracket in a direction transverse to the tube section axis.

At least one of said tube engaging members can be forked so as to embrace a second tube section that extends transversely from the first tube section. This allows the bracket to engage the tubing at a connection point between two tube sections.

The mounting bracket may further include a base plate for attaching the mounting bracket to the frame of the solar collector, wherein said base plate is provided with three or more frame facing protrusions to minimize the contact area between the frame and the base plate. By reducing the contact area the heat loss at the connection between the mounting bracket and the frame is minimized. Through going bores in the base plate may coincide with the protrusions, so that fasteners such a pop-rivets or bolts and nuts can be applied there though and through corresponding bores in the frame.

The base plate and a first of the tube engaging members are preferably integrally connected to one another by a connecting part that is at an angle with the base plate and the second tube engaging member being securable relative to the first tube engaging member. The connecting part may comprise a substantially flat plate section, and at least a part of the oppositely disposed free edges of the flat plate section can be bent over to reinforce the mounting bracket. The free edge may be bent over to obtain a substantially U-shaped cross-section in which a flat plate part of the second tube engaging member is slidably received.

The flat plate section that is integral with the first tube engaging member can be provided with one through going bore and the flat plate part of the second tube engaging member can be provided with two through going bores that overlap with the through going bore of the flat plate section in two distinct positions, whereby the tube engaging members slidably engage the tube section in one of the two distinct positions and the tube engaging members loosely engage the tube section in the other of the two distinct positions. A pop rivet, bolt or similar fastener can be received in the through going bores to fasten the second tube engaging member in either of the two distinct positions.

The tube engaging members are preferably at least partially curved with a radius equal to or slightly larger than the tube section to be engaged.

At least a part of the mounting bracket can be made of a material with a relatively low thermal conductivity, such as stainless steel, to reduce heat loss via the mounting bracket to the frame.

Further objects, features, advantages and properties of the solar collector according to the invention will become apparent from the detailed description.

### BRIEF DESCRIPTION OF THE DRAWINGS

In the following detailed portion of the present description, the invention will be explained in more detail with reference to the exemplary embodiments shown in the drawings, in which:
Fig. 1 is a cutaway perspective view of a solar collector according to the invention,
Figs. 2a to 2c are partial cross-sectional views of the solar collector of Fig. 1 at different temperatures,
Fig. 3 is a cross sectional view through the collector in the plane of the absorber plate, illustrating mounting brackets holding the absorber tubing,
Figs. 4a and 4b are cross sectional views transverse to the plane of the absorber to illustrate a detail of the engagement between the mounting bracket and the absorber tubing, and
Figs. 5a and 5b are perspective views showing the mounting bracket in detail.

### DETAILED DESCRIPTION

A preferred embodiment of the invention will be described specifically with reference to a flat plate collector assembly although it is understood that other absorber types may be employed with a minimum change in construction.

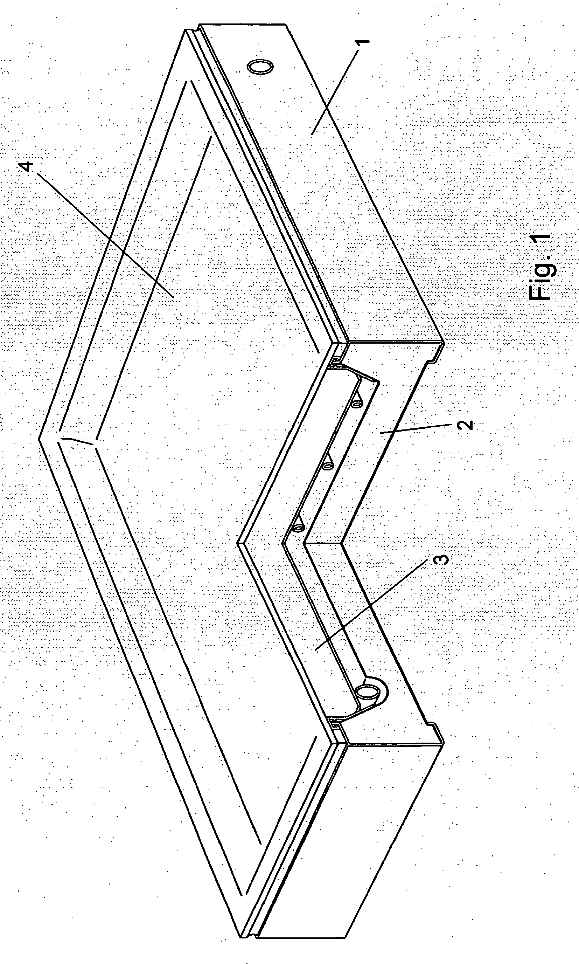

Fig. 1 shows by way of illustrative example a flat plate solar energy collector. Seen in cutaway perspective view of Fig. 1 the solar collector has a frame 1, an insulation layer 2, an absorber plate 3 and a cover pane 4. The frame, the insulation layer and the cover pane form a case with an enclosure. The enclosure is used to provide support for the absorber, and to protect the collector from heat loss due to wind, plus the important function of keeping moisture from rain, snow and dew out of the collector.

The insulation layer 2 is made of a rigid foam urethane (PUR) or polyisocyanurate (PIR). These materials have an excellent insulation value per unit of thickness and are easy to handle because they are very light. They have also a higher compression resistance than e.g. mineral wool based insulation materials.

The upper surface of the insulation layer 2 is covered with a reflective silver foil and provided with a recess sized to be able to receive the absorber 3. The absorber 3 is received in the in the recess and except for its upper side surrounded by the insulation layer 2.

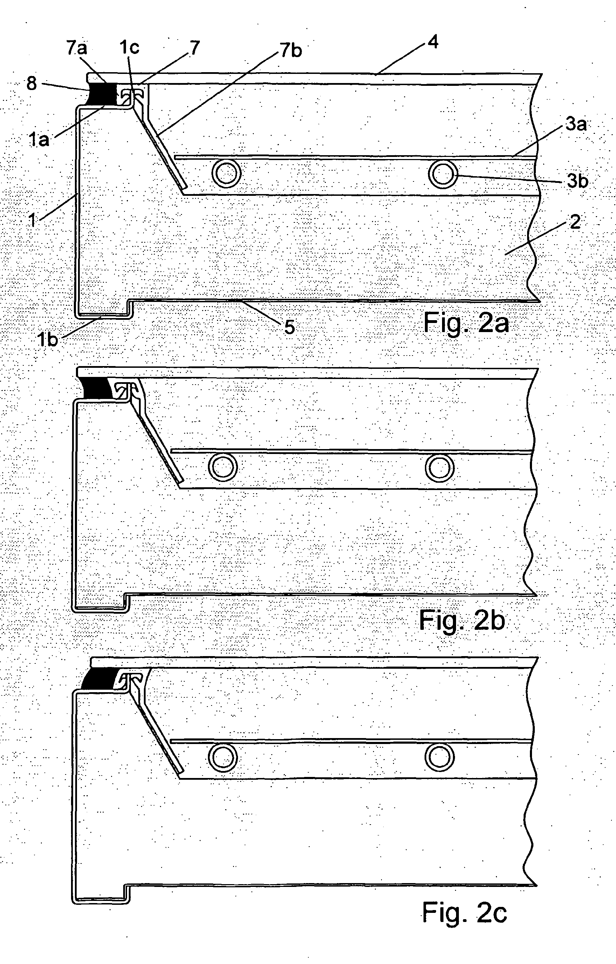

As shown in Fig. 2a the absorber comprises an absorber plate 3a and an absorber tubing 3b that channels the medium, typically water, used to transport the collected thermal energy. The absorber plate 3a and the copper tubing 3b may suitably consist of steel, copper or aluminum sheet or tubing, respectively.

The absorber plate 3a is provided with a semi-selective or a selective coating to improve the heat absorbing capacity of the absorber plate 3a.

The solar collector may also be provided with a backsheet 5 to protect the insulation layer 2 from weather influences and to increase the rigidity of the construction. The backsheet is suitably formed by a plastic sheet or film material weaker than the frame material, e.g. polypropylene sheet or aluminum foil. A backsheet can be altogether avoided if the bottom side of the insulation layer is coated.

The frame 1 comprises four side panels that are part of one rollformed sheet material profile. The sheet material is suitably made of sheet metal, preferably pre-painted aluminum.

The side panels 1 are substantially shaped as a U-profile with an upper inwardly directed latch 1a and a lower inwardly directed latch 1b. The upper latch 1a is provided with an upstanding rim 1c.

The details of the frame construction and the type of insulation material are however not crucial for the present invention, and the frame could alternatively be made from extruded metal (aluminum) or from wood and a back sheet. A layer of mineral wool can be sued instead of rigid foam as insulation material.

The upstanding rim 1c acts as a spacer that supports the cover pane 4 and maintains a distance between the upper surface of latch 1a and the bottom surface of the cover pane 4 during fitting of the cover pane. A continuous EPDM neoprene gasket 7 is placed on the upstanding rims 1c. The gasket 7 is in sealing abutment with a peripheral zone of the bottom surface of the cover pane 4 to form a moisture barrier protecting the enclosure and to insulate the cover pane 4 thermally from the side panels 1.

The gasket is provided on its outwardly facing side with a flexible dam 7a. The flexible dam 7a is arranged to define a hollow space between the rim and the dam itself. The hollow space allows the flexible dam to move unhindered. The gasket is provided on its inwardly facing side with a flap 7b extending over the insulation layer and under the absorber 3. The flap protects the silver foil and the insulation layer from the sides of the absorber plate 3a.

When the gasket has been placed on the rim 1c, the cover pane 4 is placed on top of the gasket 7 and the space between the upper side of the latch 1a and the bottom surface of the cover pane 4 is filled with a flexible adhesive sealant such as a silicone based sealant in liquid form. The flexible dam 7a serves as a barrier preventing the liquid flexible adhesive sealant from entering the cavity when it is applied.

When the sealant has cured it forms a flexible layer that securely attaches the cover pane 4 to the side panels. The layer of flexible adhesive sealant also forms a second moisture barrier protecting the enclosure. The enclosure is thus protected from moisture by a two-stage barrier, thus, reducing the likeliness of leakage significantly.

The layer of flexible adhesive sealant attaches the cover pane 4 to the side panels so that the cover pane 4 becomes an integral bearing part of the construction that contributes to the overall stability and stiffness of the solar collector. There is therefore no need for capstrips and thus there is no risk of water or snow to remain caught at the transition between the cover pane and the capstrip.

Fig. 2a illustrates the cross-section of the solar collector at room temperature. Since this is the temperature at which the cover pane was fitted to the frame there are no discrepancies in length between the aluminum frame and the tempered glass cover pane.

Fig. 2b illustrates the cross-section of the solar collector at a high temperature such as may e.g. occur during stagnation, i.e. when the heat transporting medium is not flowing so that the heat is not transported away.

The cover pane has expanded more than the frame with the temperature raise. The difference in length is compensated for by an outwardly directed shear deformation of the layer of flexible adhesive sealant 8.

Fig. 2c illustrates the cross-section of the solar collector at a low temperature such as may e.g. occur in a cold winter night. The cover pane has contracted more than the frame with the temperature fall. The difference in length is compensated for by an inwardly directed shear deformation of the layer of flexible adhesive sealant 8.

Flexible adhesive sealants such as silicon based sealant can well endure such deformation and still maintain good adhesion to the cover pane and the frame both at low and high temperatures. Because of the low elasticity modus of the flexible adhesive sealant the shear forces acting on the cover pane and the frame are negligible.

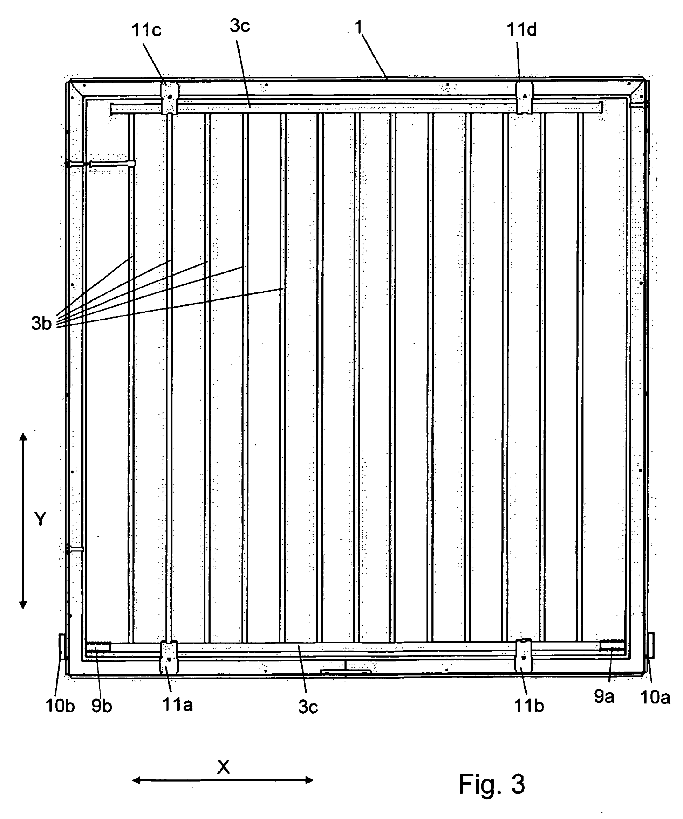

As shown in Fig. 3, the absorber tubing includes two horizontally (horizontal as in Fig. 3) directed tubes 3c with a larger diameter that are interconnected by a plurality of vertically (vertical as in Fig. 3) directed lesser diameter tubes 3b extending between the large diameter tubes in a direction substantially transverse to the large diameter tubes 3c.

Although not shown, all tubing 3b and 3c may be of equal diameter.

The lower (low as in Fig. 3) of the two larger diameter tubes 3c is connected via a section of flexible tubing 9a to a bracket 10a that is secured to the frame 1 and includes a conduit (not shown) extending to the outside of the frame 1 for connection to external tubing or a juxtaposed collector (not shown).

The higher (high as in Fig. 3) of the two larger tubes 3c is connected via a section of flexible tubing 9b to a bracket 10b that is secured the frame 1 and includes a conduit (not shown) extending to the outside of the frame 1 for connection to external tubing or a juxtaposed collector.

The flexible tubing sections 9a and 9b ensure that the absorber plate 3a and absorber tubing 3c can thermally expand and contract without any tension building up at the connection between the absorber tubing 3b,3c and the frame 1.

Four mounting brackets 11a,11b,11c,11d support the absorber 3. These four mounting brackets are identical in construction, but can engage the absorber tubing in four different ways. The mounting brackets 11a,11b,11c,11d are rectangularly spaced apart and extend from the frame 1 to engage the absorber tubing 3b,3c. The mounting brackets 11a-11d are configured to be able to engage the larger diameter tubing 3c either slidably, thereby allowing displacement between the larger diameter tubing 3c and the mounting bracket in the direction of the tube axis, or loosely, thereby allowing both a limited displacement between the tube and the mounting bracket transversely to the tube axis and unlimited displacement in the direction of the tube axis. The brackets are configured to be able to engage simultaneously a larger diameter tube either slidably or loosely and a lesser diameter tube slidably at a point where the two tube types are connected to one another at substantially right angles. The engagement structure of the mounting bracket will be described in more detail further below with.

The first mounting bracket 11a engages the absorber tubing in the left lower corner (left and lower as in Fig. 3) at a point where the leftmost lesser diameter tube 3b connects to the lower larger diameter tube 3c. The first mounting bracket engages both the large diameter tube 3c and the lesser diameter tube 3b, thereby ensuring that the absorber 3 cannot be displaced relative to the frame 1.

The second mounting bracket 11b engages the absorber tubing in the right lower corner (right and lower as in Fig. 3), and only engages the lower larger diameter tube 3c in a slidable manner so to allow for movement of the lower tube 3c relative to the second bracket 11b in the direction of arrow X. Thus, thermal expansion of the absorber 3 in the direction of arrow X can take place substantially unhindered by the connection between the frame 1 and the absorber 3 formed by the second mounting bracket 11b.

The third mounting bracket 11c engages the absorber tubing in the upper left corner (upper and left as in Fig. 3), and both engages the upper larger diameter tube 3c and the left first lesser diameter tube 3b. The third bracket 11c engages the leftmost lesser diameter tube 3b in a slidable manner (slidable in the direction of the tube axis, i.e. in the direction of arrow Y). The third bracket loosely engages the upper tube 3c to so as to allow for a limited amount of movement of the upper tube 3c relative to the third bracket in the direction of arrow Y. Thus, thermal expansion of the absorber 3 in the direction of arrow Y can take place substantially unhindered by the connection between the frame 1 and the absorber 3 formed by the third mounting bracket 11c.

The fourth mounting bracket 11d engages the absorber tubing in the upper right corner (upper and right as in Fig. 3). Only the upper larger diameter tube 3c is engaged loosely by the fourth third bracket 11d, thereby allowing displacement of the absorber in the direction of both the X and Y arrow. Thus, thermal expansion of the left part of the absorber 3 in the direction of arrow Y and in the direction of arrow Y can take place substantially unhindered by the connection between the frame 1 and the absorber 3 formed by the fourth mounting bracket 11d.

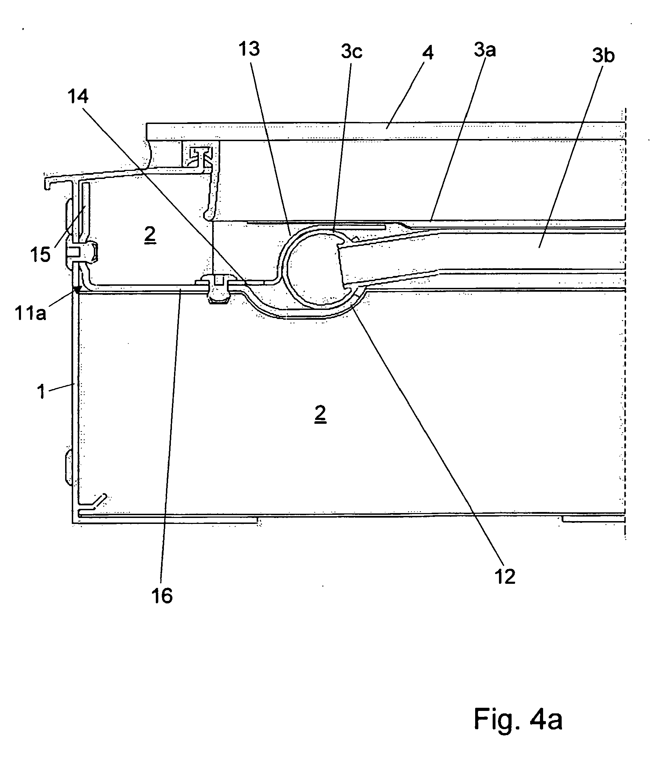

Fig. 4a shows a cross-sectional view through the first mounting bracket 11a in a plane at right angles with the tube axis of the large diameter tubes 3c. The mounting bracket 11a is secured with a base plate 15 to the frame 1. The base plate 15 is at a right angle with a connecting part 16 that further extends into a curved first tube engaging member 12. The mounting bracket 11a includes further a second curved tube engaging member 13. The second tube engaging member 13 includes a flat plate part 14 that is secured to the connecting part 16. The second tube engaging member can be secured in a two positions to obtain the above described slidable or loose engagement. In Fig. 4a the second tube engagement member is in the position that gives a slidable engagement. The first tube engagement member 12 is forked and the lesser diameter tubing 3a is embraced by the fingers of the fork.

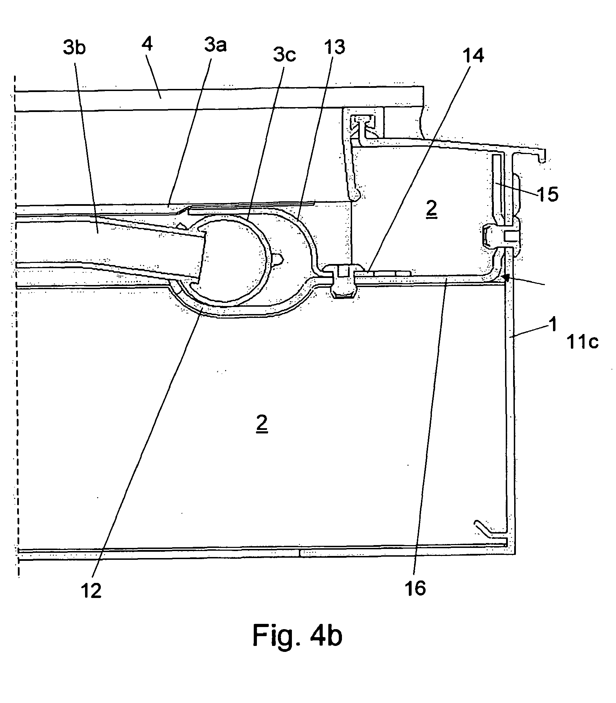

Fig. 4b shows a cross-sectional view through the third mounting bracket 11c in a plane at right angles with the tube axis of the large diameter tubes 3c. The third mounting bracket 11c is identical to the first mounting bracket 11a, except that the second tube engaging member 13 is secured in the position for engaging the larger diameter tube 3c in a loose manner.

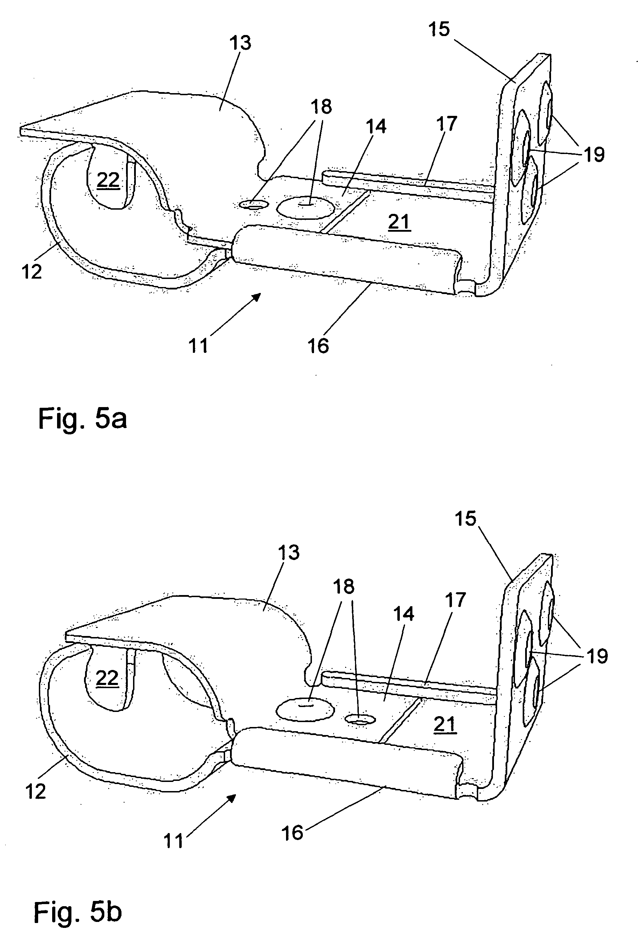

Fig. 5a shows the mounting bracket 11a-11d in a perspective view with the second tube engaging member in the slidable engagement position. Fig. 5b shows the mounting bracket 11a-11d in a perspective view with the second tube engaging member in the loose engagement position. These Figs. show the recess 22 in the forked first tube engaging member in which a lesser diameter tube 3b can be received. The base plate 15 is provided with three frame facing protrusions 19 to minimize the contact area between the frame 1 and the base plate 15. By reducing the contact area the heat loss at the connection between the mounting bracket 11a-11d and the frame 11 is minimized. Through going bores in the base plate 15 coincide with the protrusions, and fasteners such a pop-rivets or bolts and nuts are applied there though and through corresponding bores in the frame 1 to fasten the mounting bracket 11a-11d to the frame 1.

The connecting part 16 includes substantially flat plate section 21, with oppositely disposed bend over free edges 17 that serve to reinforce the mounting bracket 11a-11d. The free edges 17 create a U-shaped cross-section in which the flat plate part 14 of the second tube engaging member 13 is slidably received.

The flat plate section 21 is provided with one through going bore (cannot be seen in the Figs.) and the flat plate part 14 of the second tube engaging member 13 is provided with two through going bores 18 that overlap with the through going bore of the flat plate section 21 in two distinct positions. The tube engaging members 12,13 slidably engage the larger diameter tube 3c in one of the two distinct positions and the tube engaging members loosely 12,13 engage the larger diameter tube 3c in the other of the two distinct positions. A pop rivet, bolt or similar fastener is fitted in the through going bores 18 to fasten the second tube engaging member 13 in either of the two distinct positions.

The tube engaging members 12,13 are at least partially curved with a radius equal to or slightly larger than the larger diameter tubes 3c. The mounting brackets 11a-11d, or at least a part thereof, are made of stainless steel, or other suitable material with a relatively low thermal conductivity to reduce heat loss via the mounting bracket to the frame 1.

The same mounting bracket 11a-d is used to engage the absorber tubing in different ways:
The mounting bracket can fork or slide.
In addition it can be secured (pop riveted) in a closed or open situation for sliding and loose engagement with the absorber tubing.

Very large absorbers can be supported by 6, 8 or mere brackets, that engage the absorber tubing with an individually determined amount of freedom in displacement between the mounting bracket and the absorber tubing in accordance with the particular requirement at the point of engagement.

Although the present invention has been described in detail for purpose of illustration, it is understood that such detail is solely for that purpose, and variations can be made therein by those skilled in the art without departing from the scope of the invention.

## Claims

1. A solar collector comprising:
a frame (1), preferably made of extruded or rollformed metal,
an absorber plate (3a),
absorber tubing (3b) secured to the rear side of the absorber plate,
an insulating layer (2) beneath the absorber plate,
a cover pane (4) spaced above the absorber,
four or more mounting brackets (11a,11b,11c,11d) for connecting the absorber (3) with the frame (4), said mounting brackets engage the absorber tubing (3b), whereby
a first mounting bracket (11a) engages the absorber tubing (3b) in a manner that does not allow any displacement between the first bracket and said absorber tubing,
a second mounting bracket (11b) engages the absorber tubing (3b) in a manner that allows displacement between the second bracket and said absorber tubing only in a first direction in the plane of the absorber plate to allow for thermal expansion and contraction of the absorber plate (3a) in said first direction,
a third mounting bracket (11c) engages the absorber tubing (3b) in a manner that allows displacement between the third bracket and said absorber tubing only in a second direction in the plane of the absorber plate (3a) that is substantially transverse to the first direction to allow for thermal expansion and contraction of the absorber plate in said second direction, and
a fourth mounting bracket (11d) engages the absorber tubing (3b) in a manner that allows displacement between the fourth bracket and said absorber tubing in both the first and second direction to allow for thermal expansion and contraction of the absorber plate (3a) in said first and second direction.

2. A solar collector according to claim 1, wherein the mounting brackets (11a,11b,11c,11d) are rectangularly spaced apart.

3. A solar collector according to claim 1 or 2, wherein the first mounting bracket (11a) and the fourth mounting bracket (11d) are disposed diagonally opposite to one another.

4. A solar collector according to claim 3, wherein the second mounting bracket (11b) and the third mounting bracket (11c) are disposed diagonally opposite to one another.

5. A solar collector according to any of claims 1 to 4, wherein the absorber tubing (3b) includes tube sections that extend in the first direction and tube sections that extend in the second direction.

6. A solar collector according to claim 5, wherein said first mounting bracket (11a) engages both a tube section that extends in the first direction and a tube section that extends in the second direction.

7. A solar collector according to claim 5 or 6, wherein said second mounting bracket (11b) slidably engages a tube section that extends in the first direction to allow for displacement between said tube section and the second mounting bracket in the first direction.

8. A solar collector according to any of claims 5 to 7, wherein said third mounting bracket (11c) slidably engages a tube section that extends in the second direction and loosely engages a tube section that extends in the first direction to allow for displacement between said tube sections and the third bracket in the second direction.

9. A solar collector according to any of claims 5 to 8, wherein said fourth mounting bracket (11d) loosely- and slidably engages a tube section that extends in the first direction or in the second direction to allow for displacement between said tube section and the fourth bracket in the first and second direction.

10. A solar collector according to any of claims 1 to 9, wherein said four or more mounting brackets (11a,11b,11c,11d) are substantially identical to one another.

11. A solar collector according to any of claims 1 to 10, wherein at least one of said mounting brackets (11a,11b,11c,11d), for engaging one or more tube sections of said solar collector, comprises two tube engaging members (12,13) that can be fixed to engage a tube section in at least two positions, a first position in which the tube section is slidably engaged and a second position in which the tube section is loosely engaged to allow displacement between the tube section and the mounting bracket in a direction transverse to the tube section axis.

12. A solar collector according to claim 11, wherein at least one of said tube engaging members (12,13) is forked so as to embrace a second tube section that extends transversely from the first tube section.

13. A solar collector according to claim 11 or 12, further comprising a base plate (15) for attaching the mounting bracket to the frame of the solar collector, wherein said base plate (15) is provided with three or more frame facing protrusions (19) to minimize the contact area between the frame and the base plate (15).

14. A solar collector according to claim 13, wherein through going bores in the base plate (15) coincide with the protrusions.

15. A solar collector according to claim 13 or 14, wherein the base plate (15) and a first of the tube engaging members (12) are integrally connected to one another by a connecting part (16) that is at an angle with the base plate and the second tube engaging member (13) being securable relative to the first tube engaging member (13).

16. A solar collector according to claim 15, wherein the connecting part (16) comprises a substantially flat plate section, at least a part of the oppositely disposed free edges (17) of the flat plate section being bent over to reinforce the mounting bracket.

17. A solar collector according to claim 16, wherein said free edge (17) is bent over to obtain a substantially U-shaped cross-section in which a flat plate part (14) of the second tube engaging member is slidably received.

18. A solar collector according to claim 17, wherein the flat plate section (14) that is integral with the first tube engaging member is provided with one through going bore (18) and the flat plate part of the second tube engaging member is provided with two through going bores (18) that overlap with the through going bore of the flat plate section in two distinct positions, whereby the tube engaging members (12,13) slidably engage the tube section in one of the two distinct positions and the tube engaging members (12,13) loosely engage the tube section in the other of the two distinct positions.

19. A solar collector according to claim 18, wherein a pop rivet, bolt or similar fastener is received in the through going bores (18) to fasten the second tube engaging member (13) in either of the two distinct positions.

20. A solar collector according to any of claims 11 to 19, wherein said tube engaging members (12,13) are at least partially curved with a radius equal to or slightly larger than the tube section to be engaged.

21. A solar collector according to any of claims 11 to 20, wherein at least a part of the mounting bracket is made of a material with a relatively low thermal conductivity, such as stainless steel, to reduce heat loss via the mounting bracket to the frame.

## Patentansprüche

1. Sonnenkollektor mit:
einem Rahmen (1), der vorzugsweise aus extrudiertem oder rollgeformten Metall hergestellt ist,
einer Absorberplatte (3a),
Absorberrohrleitungen (3b), die an der Rückseite der Absorberplatte angebracht sind,
einer Isolierschicht (2) unterhalb der Absorberplatte,
einer Abdeckscheibe (4), die über dem Absorber beabstandet ist,
vier oder mehr Halteträgern (11a, 11b, 11c, 11d), um den Absorber (3) mit dem Rahmen (4) zu verbinden, wobei die Halteträger mit den Absorberrohrleitungen (3b) eingreifen, wobei
ein erster Halteträger (11a) mit den Absorberrohrleitungen (3b) in einer Weise eingreift, die keine Verlagerung zwischen dem ersten Träger und den Absorberrohrleitungen ermöglicht,
ein zweiter Halteträger (11b) mit den Absorberrohrleitungen (3b) in einer Weise eingreift, die eine Verlagerung zwischen dem zweiten Träger und den Absorberrohrleitungen nur in einer ersten Richtung in der Ebene der Absorberplatte ermöglicht, um eine thermische Expansion und Kontraktion der Absorberplatte (3a) in dieser ersten Richtung zu ermöglichen,
ein dritter Halteträger (11c) mit den Absorberrohrleitungen (3b) in einer Weise eingreift, die eine Verlagerung zwischen dem dritten Träger und den Absorberrohrleitungen nur in einer zweiten Richtung in der Ebene der Absorberplatte (3a) ermöglicht, die im Wesentlichen quer zur ersten Richtung verläuft, um eine thermische Expansion und Kontraktion der Absorberplatte in dieser zweiten Richtung zu ermöglichen, und
ein vierter Halteträger (11d) mit den Absorberrohrleitungen (3b) in einer Weise eingreift, die eine Verlagerung zwischen dem vierten Träger und den Absorberrohrleitungen sowohl in der ersten als auch in der zweiten Richtung ermöglicht, um eine thermische Expansion und Kontraktion der Absorberplatte (3a) in der ersten und zweiten Richtung zu ermöglichen.

2. Sonnenkollektor nach Anspruch 1, bei dem die Halteträger (11a, 11b, 11c, 11d) rechteckig voneinander beabstandet sind.

3. Sonnenkollektor nach Anspruch 1 oder 2, bei dem der erste Halteträger (11a) und der vierte Halteträger (11d) diagonal gegenüberliegend zueinander angeordnet sind.

4. Sonnenkollektor nach Anspruch 3, bei dem der zweite Halteträger (11b) und der dritte Halteträger (11c) diagonal gegenüberliegend zueinander angeordnet sind.

5. Sonnenkollektor nach einem der Ansprüche 1 bis 4, bei dem die Absorberrohrleitungen (3b) Rohrabschnitte, die sich in der ersten Richtung erstrecken, und Rohrabschnitte aufweisen, die sich in der zweiten Richtung erstrecken.

6. Sonnenkollektor nach Anspruch 5, bei dem der erste Halteträger (11a) sowohl mit einem Rohrabschnitt, der sich in der ersten Richtung erstreckt, als auch mit einem Rohrabschnitt eingreift, der sich in der zweiten Richtung erstreckt.

7. Sonnenkollektor nach Anspruch 5 oder 6, bei dem der zweite Halteträger (11b) verschiebbar mit einem Rohrabschnitt eingreift, der sich in der ersten Richtung erstreckt, um eine Verlagerung zwischen diesem Rohrabschnitt und dem zweiten Halteträger in der ersten Richtung zu ermöglichen.

8. Sonnenkollektor nach einem der Ansprüche 5 bis 7, bei dem der dritte Halteträger (11c) verschiebbar mit einem Rohrabschnitt eingreift, der sich in der zweiten Richtung erstreckt, und lose mit einem Rohrabschnitt eingreift, der sich in der ersten Richtung erstreckt, um eine Verlagerung zwischen den Rohrabschnitten und dem dritten Träger in der zweiten Richtung zu ermöglichen.

9. Sonnenkollektor nach einem der Ansprüche 5 bis 8, bei dem der vierte Halteträger (11d) lose und verschiebbar mit einem Rohrabschnitt eingreift, der sich in der ersten Richtung oder in der zweiten Richtung erstreckt, um eine Verlagerung zwischen dem Rohrabschnitt und dem vierten Träger in der ersten und zweiten Richtung zu ermöglichen.

10. Sonnenkollektor nach einem der Ansprüche 1 bis 9, bei dem die vier oder mehr Halteträger (11a, 11b, 11c, 11d) im Wesentlichen identisch zueinander sind.

11. Sonnenkollektor nach einem der Ansprüche 1 bis 10, bei dem mindestens einer der Halteträger (11a, 11b, 11c, 11d) zum Eingreifen mit einem oder mehr Rohrabschnitten des Sonnenkollektors zwei Rohreingreifbauteile (12, 13) aufweist, die befestigt werden können, um mit einem Rohrabschnitt in mindestens zwei Positionen einzugreifen, und zwar einer ersten Position, in der der Rohrabschnitt verschiebbar in Eingriff steht, und in einer zweiten Position, in der der Rohrabschnitt lose in Eingriff steht, um eine Verlagerung zwischen dem Rohrabschnitt und dem Halteträger in einer Richtung quer zur Achse des Rohrabschnitts zu ermöglichen.

12. Sonnenkollektor nach Anspruch 11, bei dem mindestens eines der Rohreingreifbauteile (12, 13) gegabelt ist, um so einen zweiten Rohrabschnitt zu umgreifen, der sich quer von dem ersten Rohrabschnitt erstreckt.

13. Sonnenkollektor nach Anspruch 11 oder 12, außerdem mit einer Basisplatte (15), um den Halteträger an dem Rahmen des Sonnenkollektors anzubringen, wobei die Basisplatte (15) mit drei oder mehr dem Rahmen zugewandten Vorsprüngen (19) versehen ist, um das Kontaktgebiet zwischen dem Rahmen und der Basisplatte (15) zu minimieren.

14. Sonnenkollektor nach Anspruch 13, bei dem durchgehende Bohrungen in der Basisplatte (15) mit den Vorsprüngen zusammen fallen.

15. Sonnenkollektor nach Anspruch 13 oder 14, bei dem die Basisplatte (15) und ein erstes der Rohreingreifbauteile (12) durch ein Verbindungsteil (16) integriert verbunden sind, das mit einem Winkel zur Basisplatte verläuft, und das zweite Rohreingreifbauteil (13) relativ zum ersten Rohreingreifbauteil (12) befestigt werden kann.

16. Sonnenkollektor nach Anspruch 15, bei dem das Verbindungsteil (16) einen im Wesentlichen flachen Plattenabschnitt aufweist, wobei mindestens ein Teil der gegenüberliegend angeordneten freien Kanten (17) des flachen Plattenabschnitts umgebogen sind, um den Halteträger zu verstärken.

17. Sonnenkollektor nach Anspruch 16, bei dem die freie Kante (17) umgebogen ist, um einen im Wesentlichen U-förmigen Querschnitt zu erhalten, in dem ein flaches Plattenteil (14) des zweiten Rohreingreifbauteils verschiebbar aufgenommen ist.

18. Sonnenkollektor nach Anspruch 17, bei dem der flache Plattenabschnitt (14), der mit dem ersten Rohreingreifbauteil integriert ist, mit einer durchgehenden Bohrung (18) versehen ist, und das flache Plattenteil des zweiten Rohreingreifbauteils mit zwei durchgehenden Bohrungen (18) versehen ist, die sich mit der durchgehenden Bohrung des flachen Plattenabschnitts in zwei verschiedenen Positionen überlagern, wodurch die Rohreingreifbauteile (12, 13) verschiebbar in einer der beiden verschiedenen Positionen mit dem Rohrabschnitt eingreifen und die Rohreingreifbauteile (12, 13) lose in der anderen der beiden verschiedenen Positionen mit dem Rohrabschnitt eingreifen.

19. Sonnenkollektor nach Anspruch 18, bei dem ein Blindniet, ein Bolzen oder ein ähnliches Befestigungsmittel in den durchgehenden Bohrungen (18) aufgenommen ist, um das zweite Rohreingreifbauteil (13) in einer der beiden verschiedenen Positionen zu befestigen.

20. Sonnenkollektor nach einem der Ansprüche 11 bis 19, bei dem die Rohreingreifbauteile (12, 13) mindestens teilweise mit einem Radius gekrümmt sind, der gleich oder etwas größer ist als der des in Eingriff stehenden Rohrabschnitts.

21. Sonnenkollektor nach einem der Ansprüche 11 bis 20, bei dem zumindest ein Teil des Halteträgers aus einem Material mit einer relativ geringen thermischen Leitfähigkeit hergestellt ist, wie zum Beispiel Edelstahl, um Wärmeverluste über den Halteträger auf den Rahmen zu reduzieren.

## Revendications

1. Collecteur solaire comprenant :
un châssis (1), de préférence en métal extrudé ou profilé,
une plaque absorbante (3a)
un tuyau absorbant (3b) fixé à la face arrière de la plaque absorbante,
une couche isolante (2) en dessous de la plaque absorbante,
un panneau protecteur (4) situé au-dessus de l'absorbant,
au moins quatre supports de montage (11a, 11b, 11c, 11d) afin de connecter l'absorbant (3) au châssis (4), les supports de montage permettant d'enclencher le tuyau absorbant (3b), parmi lesquels :
un premier support de montage (11a) permet d'enclencher le tuyau absorbant (3b) de telle sorte qu'aucun mouvement n'est possible entre le premier support et le tuyau absorbant,
un second support de montage (11b) permet d'enclencher le tuyau absorbant (3b) de telle sorte qu'un mouvement est possible entre le second support et le tuyau absorbant, mais seulement dans un premier sens dans le plan de la plaque absorbante afin permettre la dilatation et la contraction thermiques de la plaque absorbante (3a) dans le premier sens,
un troisième support de montage (11c) permet d'enclencher le tuyau absorbant (3b) de telle sorte qu'un mouvement est possible entre le troisième support et le tuyau absorbant, mais seulement dans un second sens dans le plan de la plaque absorbante (3a) qui est substantiellement transversal au premier sens afin de permettre la dilatation et la contraction thermiques de la plaque absorbante dans le second sens, et
un quatrième support de montage (11d) permet d'engager le tuyau absorbant (3b) de telle sorte qu'un mouvement est possible entre le quatrième support et le tuyau absorbant à la fois dans le premier et le second sens afin de permettre la dilatation et la contraction thermiques de la plaque absorbante (3a) dans le premier et le second sens.

2. Collecteur solaire selon la revendication 1, dans lequel les supports de montage (11a, 11b, 11c, 11d) sont espacés de façon rectangulaire.

3. Collecteur solaire selon la revendication 1 ou 2, dans lequel le premier support de montage (11a) et le quatrième support de montage (11d) sont disposés sur une diagonale, l'un opposé à l'autre.

4. Collecteur solaire selon la revendication 3, dans lequel le second support de montage (11b) et le troisième support de montage (11c) sont disposés sur une diagonale, l'un opposé à l'autre.

5. Collecteur solaire selon l'une quelconque des revendications 1 à 4, dans lequel le tuyau absorbant (3b) comprend des parties de tuyau qui s'étendent dans le premier sens et des parties de tuyau qui s'étendent dans le second sens.

6. Collecteur solaire selon la revendication 5, dans lequel le premier support de montage (11a) permet d'enclencher à la fois une partie de tuyau qui s'étend dans le premier sens et une partie de tuyau qui s'étend dans le second sens.

7. Collecteur solaire selon la revendication 5 ou 6, dans lequel le second support de montage (11b) permet d'enclencher de façon coulissante une partie de tuyau qui s'étend dans le premier sens de telle sorte qu'un mouvement est possible entre la partie de tuyau et le second support de montage dans le premier sens.

8. Collecteur solaire selon l'une quelconque des revendications 5 à 7, dans lequel le troisième support de montage (11c) permet d'enclencher de façon coulissante une partie de tuyau qui s'étend dans le second sens et permet d'enclencher sans serrer une partie de tuyau qui s'étend dans le premier sens de telle sorte qu'un mouvement est possible entre les parties de tuyau et le troisième support dans le second sens.

9. Collecteur solaire selon l'une quelconque des revendications 5 à 8, dans lequel le quatrième support de montage (11d) permet d'enclencher de façon coulissante et sans serrer, une partie de tuyau qui s'étend dans le premier sens ou dans le second sens de telle sorte qu'un mouvement est possible entre la partie de tuyau et le quatrième support dans le premier sens et dans le second sens.

10. Collecteur solaire selon l'une quelconque des revendications 1 à 9, dans lequel au moins quatre supports de montage (11a, 11b, 11c, 11d) sont substantiellement identiques les uns aux autres.

11. Collecteur solaire selon l'une quelconque des revendications 1 à 10, dans lequel au moins un des supports de montage (11a, 11b, 11c, 11d) permettant d'enclencher une ou plusieurs parties de tuyau du collecteur solaire, comprend deux éléments d'enclenchement de tuyau (12, 13) qui peuvent être fixés afin d'enclencher une partie de tuyau dans au moins deux positions, une première position dans laquelle la partie de tuyau est enclenchée de façon coulissante et une seconde position dans laquelle la partie de tuyau est enclenchée sans serrer de telle sorte qu'un mouvement est possible entre la partie de tuyau et le support de montage dans un sens transversal à l'axe de la partie de tuyau.

12. Collecteur solaire selon la revendication 11, dans lequel au moins un des éléments d'enclenchement de tuyau (12, 13) est en forme de fourche afin d'épouser une seconde partie de tuyau qui s'étend transversalement depuis la première partie de tuyau.

13. Collecteur solaire selon la revendication 11 ou 12, comprenant également un panneau de base (15) afin de connecter le support de montage au châssis du collecteur solaire, dans lequel le panneau de base (15) comporte au moins trois protubérances en regard du châssis (19) afin de réduire la zone de contact entre le châssis et le panneau de base (15).

14. Collecteur solaire selon la revendication 13, dans lequel des alésages traversants dans le panneau de base (15) coïncident avec les protubérances.

15. Collecteur solaire selon la revendication 13 ou 14, dans lequel le panneau de base (15) et un premier élément d'enclenchement de tuyau (12) sont intégralement connectés l'un à l'autre par une pièce de connexion (16) qui forme un angle avec le panneau de base et le second élément d'enclenchement du tuyau (13) pouvant être fixé au premier élément d'enclenchement de tuyau (13).

16. Collecteur solaire selon la revendication 15, dans lequel la pièce de connexion (16) comprend une partie de panneau substantiellement plane, au moins une partie des bords libres opposés (17) de la partie plane de panneau étant courbée afin de renforcer le support de montage.

17. Collecteur solaire selon la revendication 16, dans lequel le bord libre (17) est recourbé afin d'obtenir une section substantiellement en forme de U dans laquelle la partie plane du panneau (14) du second élément d'enclenchement de tuyau est accueillie de façon coulissante.

18. Collecteur solaire selon la revendication 17, dans lequel la partie plane du panneau (14) qui est intégrée au premier élément d'enclenchement de tuyau comporte un alésage traversant (18) et la partie plane du panneau du second élément d'enclenchement de tuyau comporte deux alésages traversants (18) qui chevauchent l'alésage traversant de la partie plane du panneau dans deux positions différentes, de telle sorte que les éléments d'enclenchement de tuyau (12, 13) permettent d'enclencher de façon coulissante la partie de tuyau dans une des deux positions différentes et les éléments d'enclenchement de tuyau (12, 13) permettent d'enclencher sans serrer la partie de tuyau dans l'autre des deux positions différentes.

19. Collecteur solaire selon la revendication 18, dans lequel les alésages traversants (18) reçoivent un rivet aveugle, un boulon ou une pièce de fixation similaire afin de fixer le second élément d'enclenchement du tuyau (13) dans n'importe laquelle des deux positions différentes.

20. Collecteur solaire selon l'une quelconque des revendications 11 à 19, dans lequel les éléments d'enclenchement du tuyau (12, 13) sont au moins partiellement recourbés avec un rayon égal ou légèrement supérieur à la partie du tuyau à enclencher.

21. Collecteur solaire selon l'une quelconque des revendications 11 à 20, dans lequel au moins une partie du support de montage est en un matériau présentant une conductivité thermique relativement basse, comme par exemple l'acier inoxydable, afin de réduire les pertes de chaleur par le support de montage vers le châssis.
